# EUROPEAN PATENT SPECIFICATION

(11) **EP 1 387 778 B1**
(45) Date of publication and mention of the grant of the patent: **07.12.2005**
(21) Application number: 02733679.1
(22) Date of filing: 14.05.2002
(51) Int. Cl.: B60K 41/02, B60K 41/08, F16H 61/02

(54) **DRIVE MEANS FOR MOTOR VEHICLES**
ANTRIEBSMITTEL FÜR KRAFTFAHRZEUGE
DISPOSITIF MOTEUR POUR VEHICULES AUTOMOBILES

(30) Priority: 15.05.2001 SE 0101698
(43) Date of publication of application: 11.02.2004
(73) Proprietor: VOLVO LASTVAGNAR AB, 405 08 Göteborg (SE)
(72) Inventor: ERIKSSON, Anders, S-413 20 Göteborg (SE); STEEN, Marcus, S-424 33 Angered (SE)
(74) Representative: Hellbom, Lars Olof
(86) International application number: PCT/SE2002/000911
(87) International publication number: WO 2002/092378

(56) References cited:
- US-A- 2 069 818
- US-A- 3 698 525
- US-A- 4 407 398
- US-A- 5 024 305
- US-A- 5 754 968

## Description

The present invention relates to a drive unit for motor vehicles having the features of the preamble of claim 1 and known from US-A-5 024 305.

Drive units of this type with so-called auto-shift gearboxes have become more and more common in heavy vehicles as microcomputer technology has been developed and made it possible, with the aid of a control computer and a number of control means, e.g. servomotors, to precision-regulate engine speed, engagement and disengagement of a disc clutch between engine and gearbox and gearbox coupling means relative to each other, so as to always provide smooth shifting at the correct rotational speed. The advantage of an auto-shift transmission over a traditional automatic transmission, made up of a planet gear stage with a hydrodynamic torque converter on the input side, is, on the one hand, particularly when used in heavy vehicles, that it is simpler and more reliable and can be manufactured at a substantially lower cost than a traditional automatic transmission, and, on the other hand, that it has a higher efficiency, making lower fuel consumption possible.

The automatic transmission made up of planet gears usually has one-way clutches between the planet stages. When the engine is driving in the automatic shift mode, these clutches engage for torque transmission from the engine to the driven wheels, but when there is torque transmission in the opposite direction, i.e. zero throttle and the vehicle in movement, they will release and allow the vehicle to roll forward without engine braking, which results in reduced fuel consumption by utilizing the kinetic energy of the vehicle.

The purpose of the present invention is to achieve an automated auto-shift gearbox of the type described by way of introduction which is constructed to provide an automatic free-wheeling function corresponding to that in the traditional automatic transmission with planet gear stages and free-wheel clutches.

This is achieved according to the invention by the features of claim 1.

When the driver desires to change the mode of driving the vehicle from power drive from the engine to allowing the vehicle to roll freely without engine braking, he lets up on the accelerator pedal, so that it comes into the predetermined sector where the drive connection from the engine is broken. If engine braking is desired, he can let the accelerator pedal up even further, either completely or in any case so far that it passes out of the predetermined sector within which there is free-wheeling.

The drive connection can be released by the control unit either releasing the clutch between the engine and the gearbox or by placing the gear which is currently engaged in the gearbox in its free position.

In a preferred embodiment of a drive unit according to the invention, a gearbox is used consisting of a main group and therebefore and in series therewith, a synchronised splitter group having two gears which are rotatably mounted on the input shaft and can be released at the same time and alternatively lockable to the input shaft by means of engaging and synchronising means controlled by said operating means. Each engage an individual gear on the intermediate shaft. The control unit is here disposed, in response to input signals indicating vehicle speed and accelerator position within said predetermined operating range, to release the gear currently locked relative to the input shaft by placing said engaging and synchronising means in a neutral position.

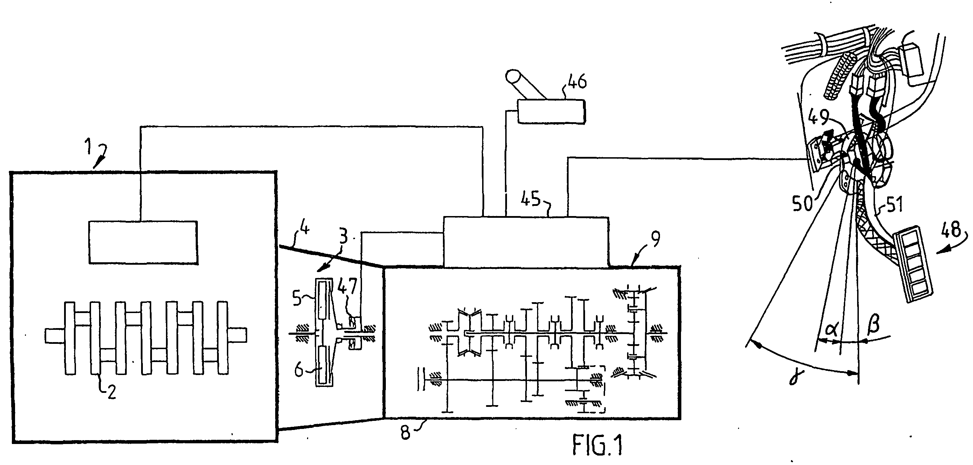

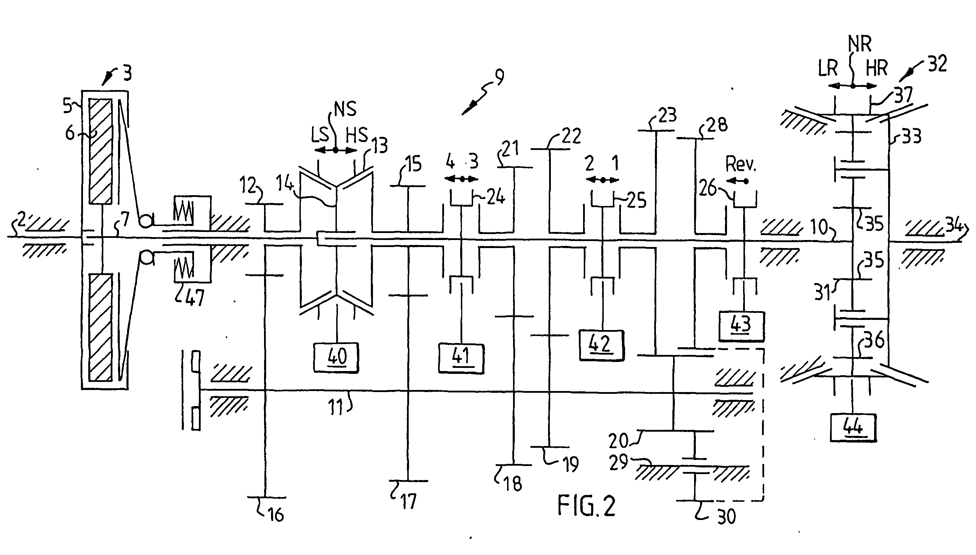

The invention will be described in more detail with reference to examples shown in the accompanying drawings, where Fig. 1 shows a schematic representation of a drive unit according to the invention and Fig. 2 shows the clutch and the gearbox of Fig. 1 on a larger scale.

In Fig. 1, 1 designates a six-cylinder internal combustion engine, e.g. a diesel engine, the crankshaft 2 of which is coupled to a single-disc dry-disc clutch, gene-rally designated 3, which is enclosed in a clutch bell 4. The crankshaft 2 is solidly joined to the clutch housing 5, while its disc 6 is solidly joined to an input shaft 7, which is rotatably mounted in the housing 8 of a gearbox, generally designated 9. A main shaft 10 and an intermediate shaft 11 are rotatably mounted in the housing 8.

As is most clearly evident from Fig. 2, a gear 12 is rotatably mounted on the input shaft 7 and can be locked to said shaft with the aid of an engaging sleeve 13 provided with synchronizing means. Said engaging sleeve 13 is non-rotatably but axially displaceably mounted on a hub 14 non-rotatably connected to the input shaft. With the aid of the engaging sleeve 13, a gear 15, rotatably mounted on the main shaft 10, is lockable relative to the input shaft 7. With the engaging sleeve 13 in a middle position NS, both gears 12 and 15 are released from their shafts 7 and 10 respectively. The gears 12 and 15, respectively, engage gears 16 and 17, respectively, which are non-rotatably joined to the intermediate shaft 11. Additional gears 18, 19 and 20, respectively, are non-rotatably joined to the intermediate shaft 11 and engage gears 21, 22 and 23, respectively, carried on, and lockable to, the main shaft with the aid of engaging sleeves 24 and 25, respectively, which, in the example shown, do not have synchronizing means. On the main shaft 10, an additional gear 28 is rotatably mounted and engages an intermediate gear 30 rotatably mounted on a separate shaft 29. The intermediate gear 30 engages in turn an intermediate shaft gear 20. The gear 28 is lockable to its shaft with the aid of an engaging sleeve 26.

The gear pairs 12, 16 and 15, 17 and the engaging sleeve 13 form a splitter group with a low stage LS and a high stage HS. The gear pair 15, 17 together with the gear pairs 21, 18, 22, 19, 23, 20 and 28, 30 form a main group with four speeds forward and one reverse. At the output end of the main shaft 10, a gear 31 is non-rotatably mounted to form the sun gear in a two-range group of planetary type, generally designated 32, the planet carrier 33 of which is non-rotatably mounted to a shaft 34, forming the output shaft of the gearbox. The planet gears 35 of the range group 32 engage a ring gear 36 which, with the aid of an engaging sleeve 37, can be locked relative to the gearbox housing 8 for low range LR and relative to the planet carrier 33 for high range HR. The engaging sleeve 37 also has a middle position NR in which the output shaft 34 is released from the main shaft 10. The engaging sleeves 13, 24, 25, 26 and 37 are displaceable as indicated by the arrows in Fig. 2, providing the gear positions indicated above the arrows. Displacement is achieved by servo means 40, 41, 42, 43 and 44, schematically indicated in Fig. 2, which can be pneumatically operated piston-cylinder devices of the type used in a gearbox of the above described type, which is marketed under the name Geartronic®.

The servo means 40, 41, 42, 43 and 44 are controlled by an electronic control unit 45 (Fig. 1), comprising a microcomputer depending on signals fed into the control unit representing various engine and vehicle data, including at least engine speed, vehicle speed, accelerator pedal 48 position and, where applicable, engine brake on-off, when an electronic gear selector 46 coupled to the control unit 45 is in its automatic position. The accelerator pedal position is obtained from an angle sensor 49, which is coupled to a gas pedal arm 51 pivoted on a shaft 50. When the selector is in its position for manual shifting, the shifting occurs at the command of the driver via the gear selector 46. The control unit 45 also controls the fuel injection, i.e. the engine speed, depending on the accelerator pedal position and the air supply to a pneumatic piston-cylinder device 47, by means of which the clutch 3 is released.

The control unit 45 is programmed according to the invention so that the free-wheeling function is activated when the driver, with the vehicle in motion and with any engine brake, for example an exhaust regulator or a compression brake, deactivated, lets up on the accelerator pedal 48 to a position within the predefined pivot angle sector α in Fig. 1, where γ designates the total pivot sector of the pedal arm 51 and β indicates a predetermined sector within which the engine idles but where there is no free-wheeling, i.e. where there is engine braking. The pivot angles α and β are in the example shown each about 5° of the total pivot angle range of the pedal arm 51 of about 30°, but the angle β can in certain cases be selected to be 0° This means that when the accelerator is let up to between ca 5° and ca 10° from its un-depressed rest position, the free-wheel function will be activated by the control unit 45, first controlling the engine speed so that no torque is transmitted between the input shaft 7 of the gearbox and the main shaft 10. The control unit 45 then sends a signal to the servo unit 40 to put the engaging sleeve 13 in its neutral position NS, whereafter the engine is controlled to idle rpm. The drive train is now decoupled and the vehicle can roll freely. By releasing a synchronised splitter group the free-wheeling function is achieved by releasing the same gearing regardless of which gear is engaged in the main group. Alternatively, the same function can be obtained by setting the engaging sleeve 37 of the range group 32 in its neutral position NR.

The control unit is programmed to deactivate the free-wheeling function when the driver either lets up the accelerator pedal to the sector β or requests engine braking by , e.g. activating an exhaust brake or a compression brake or by depressing the accelerator pedal so that it is moved past the sector α. The control unit first controls the engine speed to an rpm which makes synchronisation possible and the engaging sleeve 13 is thereafter displaced to its former engagement position. The drive train is now established and driving or engine braking is now possible.

A safety function is also programmed into the control unit 45, if the engine should stall when the free-wheeling function is activated, whereby the control unit 45 will then send a signal to first release the clutch between the engine and the gearbox and thereafter displace the engaging sleeve 13 in its neutral position to its previous engaged position.

After engagement of the synchronised gear the control unit 45 provides a signal to re-engage the clutch 3. When the clutch 3 is engaged, the engine is driven by the vehicle and any auxiliary units such as servo-pumps and engine brakes, normally driven by the engine are now driven by the vehicle via the engine.

The invention has been described above with reference to a preferred embodiment, in which the physical position of the accelerator pedal itself is sensed and controls the free-wheeling function. Within the scope of the invention it is of course also possible to sense the position of any accelerator pedal component at all, which changes setting or position as the throttle opening is changed, and to allow it to control the free-wheeling function.

## Claims

1. A drive unit for motor vehicles, comprising an internal combustion engine (1) and an auto-shift gearbox (9) having an input shaft (7) and an output shaft (34), whereby said input shaft (7) is connected via a clutch (3) to an engine crankshaft (2), said auto-shift gearbox (9) having at least one intermediate shaft (11) mounted in a housing, said intermediate shaft having at least one gear (16) in engagement with a gear (12) on the input shaft, a main shaft (10) which is mounted in the housing and has gears engaging gears on the intermediate shaft, at least one gear in each pair of engaging gears on the intermediate shaft and the main shaft being rotatably mounted on its shaft and lockable onto its shaft by engaging means (13, 24, 25), and operating means (40, 41, 42), which cooperate with said engaging means and are controlled by a control unit (45) dependent on signals fed to said control unit representing various engine and vehicle data, including at least engine speed, vehicle speed and accelerator position, said control unit (45) being arranged - upon receiving signals indicating vehicle speed and when the driver lets up on the accelerator (48) within a predetermined operating sector (α) of said accelerator (48), extending over a minor portion of the total operating sector (γ) of said accelerator - to decouple the driving connection between said engine and said output shaft (34) of the auto-shift gearbox, **characterized in that** said predetermined operating sector (α) begins at a distance (β) from the rest position of the accelerator.

2. Drive unit according to Claim 1, **characterized in that** the control unit (45) is arranged to release the driving connection by releasing a clutch (3) upon input signals indicating vehicle speed and accelerator position within said predetermined operating sector (α).

3. Drive unit according to Claim 1, **characterized in that** the control unit (45) is arranged to decouple the drive connection by placing a currently engaged gear in the gearbox (9) in its free position upon receiving signals indicating vehicle speed and accelerator position within said predetermined operating sector (α).

4. Drive unit according to Claim 3, **characterized in that** the control unit (45) is arranged, after decoupling the driving connection between the engine (1) and the output shaft of the gearbox (34), to, upon subsequent displacement of the accelerator (4) to a position outside said predetermined operating sector (α), to first steer the rpm of the engine to a suitable rpm for engagement of a gear adapted to the vehicle speed and thereafter give the operating means a signal to engage the gear.

5. Drive unit according to Claim 3 or 4, **characterized in that** at least two gears (12,15) rotatably mounted on the input shaft (7) are releasable at the same time and alternatively lockable to the shaft by engaging and synchronising means (13) controlled by said operating means (40) and each engage an individual gear (16,17) on the intermediate shaft (11), and that the control unit is disposed, upon receiving signals indicating vehicle speed and accelerator position within said predetermined operating sector (α), to release the gear currently locked relative to the input shaft by placing said engaging and synchronising means in a neutral position.

6. Drive unit according to Claim 3 or 4, **characterized in that** the gearbox (9) comprises a main group with a number of gears (1-4 and R) and a range portion with a low range (LR) and a high range (HR) for each gear in the main group and the range portion has clutch means (37) with synchronising function, which, in addition to a low position and a high position has an intermediate neutral position (NR) and that the control unit is disposed, upon receiving signals indicating vehicle speed and accelerator position within said predetermined operating sector (α), to release the currently engaged gear by placing the range selector in its neutral position.

7. Drive unit according to one of Claims 1-4, **characterized in that** the releasable gear (15,21,22,23) in each pair of interengaging gears on the intermediate shaft (11) and on the main shaft (10) is lockable to its shaft by means of engaging means (24,25) lacking a synchronising function.

8. Drive unit according to one of Claims 1-5, **characterized in that** the accelerator is a pivotally mounted accelerator pedal (48) with a pedal arm (51), which is coordinated with a sensor (49), which sends to the control unit (45) a signal dependent on the pivot angle of the pedal arm.

## Patentansprüche

1. Antriebseinheit für Motorfahrzeuge, umfassend einen Verbrennungsmotor (1) und ein Automatikgetriebe (9) mit einer Antriebswelle (7) und einer Abtriebswelle (34), wobei die Antriebswelle (7) über eine Kupplung (3) mit einer Motorkurbelwelle (2) verbunden ist, wobei das Automatikgetriebe (9) mindestens eine in einem Gehäuse montierte Zwischenwelle (11) besitzt, wobei die Zwischenwelle mindestens ein Zahnrad (16) in Eingriff mit einem Zahnrad (12) an der Antriebswelle, eine Hauptwelle (10), die in dem Gehäuse montiert ist, und Zahnräder besitzt, die mit Zahnrädern an der Zwischenwelle kämmen, wobei mindestens ein Zahnrad in jedem Paar kämmender Zahnräder an der Zwischenwelle und der Hauptwelle drehbar an seiner Welle montiert ist und an seiner Welle durch Eingriffsmittel (13, 24, 25) verriegelbar ist, und Betätigungsmittel (40, 41, 42), die mit den Eingriffsmitteln zusammenwirken und durch eine Steuereinheit (45) in Abhängigkeit von zu der Steuereinheit zugeführten Signalen gesteuert werden, die verschiedene Motor- und Fahrzeugdaten darstellen, einschließlich zumindest der Motordrehzahl, der Fahrzeuggeschwindigkeit und der Gaspedalposition, besitzt, wobei die Steuereinheit (45) angeordnet ist, um beim Empfangen von Signalen, welche die Fahrzeuggeschwindigkeit angeben, und wenn der Fahrer das Gaspedal (48) innerhalb eines vorbestimmten Betätigungssektors (α) des Gaspedals (48) loslässt, der sich über einen kleinen Abschnitt des gesamten Betätigungssektors (γ) des Gaspedals erstreckt, die Antriebsverbindung zwischen dem Motor und der Abtriebswelle (34) des Automatikgetriebes zu entkoppeln, **dadurch gekennzeichnet, dass** der vorbestimmte Betätigungssektor (α) in einem Abstand (β) von der Ruheposition des Gaspedals beginnt.

2. Antriebseinheit nach Anspruch 1, **dadurch gekennzeichnet, dass** die Steuereinheit (45) angeordnet ist, um die Antriebsverbindung durch Lösen der Kupplung (3) bei Eingabe von Signalen zu lösen, welche die Fahrzeuggeschwindigkeit und die Gaspedalposition innerhalb des vorbestimmten Betätigungssektors (α) angeben.

3. Antriebseinheit nach Anspruch 1, **dadurch gekennzeichnet, dass** die Steuereinheit (45) angeordnet ist, um die Antriebsverbindung durch Setzen eines gegenwärtig kämmenden Zahnrades in dem Getriebe (9) in seine freie Position beim Empfangen von Signalen zu entkoppeln, welche die Fahrzeuggeschwindigkeit und die Gaspedalposition innerhalb des vorbestimmten Betätigungssektors (α) angeben.

4. Antriebseinheit nach Anspruch 3, **dadurch gekennzeichnet, dass** die Steuereinheit (45) angeordnet ist, um nach dem Entkoppeln der Antriebsverbindung zwischen dem Motor (1) und der Abtriebswelle des Getriebes (34) bei nachfolgender Verschiebung des Gaspedals (4) in eine Position außerhalb des vorbestimmten Betätigungssektors (α) zuerst die Drehzahl des Motors auf eine geeignete Drehzahl zum Eingriff eines Zahnrades, das auf die Fahrzeuggeschwindigkeit abgestimmt ist, zu steuern, und danach den Betätigungsmitteln ein Signal zu geben, das Zahnrad in Eingriff zu bringen.

5. Antriebseinheit nach Anspruch 3 oder 4, **dadurch gekennzeichnet, dass** zumindest zwei Zahnräder (12; 15), die drehbar an der Antriebswelle (7) montiert sind, gleichzeitig lösbar und alternativ mit der Welle durch Eingriffs- und Synchronisiermittel (13) verriegelbar sind, die durch die Betätigungsmittel (40) gesteuert sind und jeweils ein einzelnes Zahnrad (16, 17) der Zwischenwelle (11) betätigen, und die Steuereinheit vorgesehen ist, um beim Empfangen von Signalen, welche die Fahrzeuggeschwindigkeit und die Gaspedalposition innerhalb des vorbestimmten Betätigungssektors (α) angeben, das gegenwärtig gegenüber der Antriebswelle verriegelte Zahnrad zu lösen, indem die Eingriffs- und Synchronisiermittel in eine neutrale Position gesetzt werden.

6. Antriebseinheit nach Anspruch 3 oder 4, **dadurch gekennzeichnet, dass** das Getriebe (9) eine Hauptgruppe mit einer Anzahl von Zahnrädern (1 bis 4 und R) und einen Bereichsabschnitt mit einem unteren Bereich (NR) und einem oberen Bereich (HR) für jedes Zahnrad in der Hauptgruppe umfasst, und der Bereichsabschnitt besitzt Kupplungsmittel (37) mit Synchronisierfunktion, die zusätzlich zu einer unteren Position und einer oberen Position eine mittlere neutrale Position (NR) besitzt, und dass die Steuereinheit vorgesehen ist, um beim Empfangen von Signalen, welche die Fahrzeuggeschwindigkeit und die Gaspedalposition innerhalb des vorbestimmten Betätigungssektors (α) angeben, das gegenwärtig kämmende Zahnrad durch Setzen des Bereichsauswählers in seine neutrale Position zu lösen.

7. Antriebseinheit nach Anspruch 3 oder 4, **dadurch gekennzeichnet, dass** das lösbare Zahnrad (15, 21, 22, 23) in jedem Paar miteinander kämmender Zahnräder an der Zwischenwelle (11) und an der Hauptwelle (10) an seiner Welle mittels Eingriffsmitteln (24, 25) verriegelbar ist, denen eine Synchronisierfunktion fehlt.

8. Antriebseinheit nach einem der Ansprüche 1 bis 5, **dadurch gekennzeichnet, dass** das Gaspedal ein schwenkbar montiertes Gaspedal (48) mit einem Pedalarm (51) ist, der mit einem Sensor (49) koordiniert ist, welcher ein von dem Schwenkwinkel des Pedalarms abhängiges Signal zu der Steuereinheit (45) sendet.

## Revendications

1. Unité d'entraînement pour des véhicules à moteur, comportant un moteur à combustion interne (1) et une boîte de vitesses à décalage automatique (9) ayant un arbre d'entrée (7) et un arbre de sortie (34), de sorte que ledit arbre d'entrée (7) est connecté via un embrayage (3) à un vilebrequin de moteur (2), ladite boîte de vitesses à décalage automatique (9) ayant au moins un arbre intermédiaire (11) monté dans un boîtier, ledit arbre intermédiaire ayant au moins une roue dentée (16) en engrènement avec une roue dentée (12) sur l'arbre d'entrée, un arbre principal (10) qui est monté dans le boîtier et qui a des roues dentées engrenant avec des roues dentées sur l'arbre intermédiaire, au moins une roue dentée de chaque paire de roues dentées engrenant sur l'arbre intermédiaire et l'arbre principal étant montée de manière rotative sur son arbre et pouvant être verrouillée sur son arbre par des moyens de mise en prise (13, 24, 25) et des moyens de fonctionnement (40, 41, 42) qui coopèrent avec lesdits moyens de mise en prise et qui sont commandés par une unité de commande (45) selon des signaux alimentés vers ladite unité de commande représentant diverses données du moteur et du véhicule, y compris au moins une vitesse moteur, une vitesse de véhicule et une position d'accélérateur, ladite unité de commande (45) étant agencée, lors de la réception de signaux indiquant la vitesse du véhicule lorsque le conducteur relâche l'accélérateur (48) dans un secteur de fonctionnement prédéterminé (α) dudit accélérateur (48), s'étendant sur une partie mineure du secteur de fonctionnement total (γ) dudit accélérateur, pour désaccoupler la connexion d'entraînement entre ledit moteur et ledit arbre de sortie (34) de la boîte de vitesses à décalage automatique, **caractérisée en ce que** ledit secteur de fonctionnement prédéterminé (α) commence à une distance (β) de la position de repos de l'accélérateur.

2. Unité d'entraînement selon la revendication 1, **caractérisée en ce que** l'unité de commande (45) est agencée pour libérer la connexion d'entraînement en libérant un embrayage (3) sur la base de signaux d'entrée indiquant une vitesse de véhicule et une position d'accélérateur dans ledit secteur de fonctionnement prédéterminé (α).

3. Unité d'entraînement selon la revendication 1, **caractérisée en ce que** l'unité de commande (45) est agencée pour désaccoupler la connexion d'entraînement en plaçant une roue dentée, engrenée dans la boîte de vitesses (9), dans sa position libre lors de la réception de signaux indiquant une vitesse de véhicule et une position d'accélérateur dans ledit secteur de fonctionnement prédéterminé (α).

4. Unité d'entraînement selon la revendication 3, **caractérisée en ce que** l'unité de commande (45) est agencée, après désaccouplement de la connexion d'entraînement entre le moteur (1) et l'arbre de sortie de la boîte de vitesses (34) pour, lors d'un déplacement consécutif de l'accélérateur (4) vers une position à l'extérieur dudit secteur de fonctionnement prédéterminé (α), diriger les tpm du moteur vers des tpm adaptés pour engrènement d'une roue dentée adaptée à la vitesse de véhicule, et ensuite donner aux moyens de fonctionnement un signal pour engrener la roue dentée.

5. Unité d'entraînement selon la revendication 3 ou 4, **caractérisée en ce qu'**au moins deux roues dentées (12, 15) montées de manière rotative sur l'arbre d'entrée (7) sont libérables en même temps et peuvent être verrouillées de manière alternée sur l'arbre par des moyens de mise en prise et de synchronisation (13) commandés par lesdits moyens de fonctionnement (4), et chacune venant en prise avec une roue dentée individuelle (16, 17) sur l'arbre intermédiaire (11), et **en ce que** l'unité de commande est disposée, lors de la réception de signaux indiquant une vitesse de véhicule et une position d'accélérateur dans ledit secteur de fonctionnement prédéterminé (α), pour libérer la roue dentée actuellement verrouillée par rapport à l'arbre d'entrée en plaçant lesdits moyens de mise en prise et de synchronisation dans une position neutre.

6. Unité d'entraînement selon la revendication 3 ou 4, **caractérisée en ce que** la boîte de vitesses (9) comporte un groupe principal ayant plusieurs roues dentées (1 à 4 et R) et une partie de plages ayant une plage basse (LR) et une plage haute (HR) pour chaque roue dentée dans le groupe principal, et la partie de plages a des moyens d'embrayage (37) ayant une fonction de synchronisation qui, en plus d'une position basse et d'une position haute, ont une position neutre intermédiaire (NR), et **en ce que** l'unité de commande est disposée, lors de la réception de signaux indiquant une vitesse de véhicule et une position d'accélérateur dans ledit secteur de fonctionnement prédéterminé (α), pour libérer la roue dentée engrenée en plaçant le sélecteur de plage dans sa position neutre.

7. Unité d'entraînement selon l'une quelconque des revendications 1 à 4, **caractérisée en ce que** la roue dentée libérable (15, 21, 22, 23) dans chaque paire de roues dentées engrenant mutuellement sur l'arbre intermédiaire (11) et l'arbre principal (10) peut être verrouillée sur son arbre par l'intermédiaire de moyens de mise en prise (24, 25) manquant d'une fonction de synchronisation.

8. Unité d'entraînement selon l'une quelconque des revendications 1 à 5, **caractérisée en ce que** l'accélérateur est une pédale d'accélérateur montée de manière pivotante (48) munie d'un bras de pédale (51), qui est coordonné avec un capteur (49), qui envoie vers l'unité de commande (45) un signal dépendant de l'angle de pivotement du bras de pédale.
